# EUROPÄISCHE PATENTSCHRIFT

(11) **EP 1 108 103 B1**
(45) Veröffentlichungstag und Bekanntmachung des Hinweises auf die Patenterteilung: **28.04.2004**
(21) Anmeldenummer: 99953601.4
(22) Anmeldetag: 26.08.1999
(51) Int. Cl.: E05B 49/00

(54) **FUNKFERNBEDIENSYSTEM**
RADIO REMOTE CONTROL SYSTEM
SYSTEME RADIO DE TELECOMMANDE

(30) Priorität: 28.08.1998 DE 19839195
(43) Veröffentlichungstag der Anmeldung: 20.06.2001
(73) Patentinhaber: ROBERT BOSCH GMBH, 70442 Stuttgart (DE)
(72) Erfinder: FAUST, Arno, D-72131 Ofterdingen (DE); LAYES, Paul, D-70806 Kornwestheim (DE)
(86) Internationale Anmeldenummer: PCT/DE1999/002668
(87) Internationale Veröffentlichungsnummer: WO 2000/012847

(56) Entgegenhaltungen:
- EP-A- 0 440 974
- DE-A- 19 528 099
- DE-A- 19 652 292
- DE-C- 4 018 261

## Beschreibung

### Stand der Technik

Die Erfindung betrifft ein Funkfembediensystem zur Übertragung von Fernbediensignalen zu wenigstens zwei fembedienbaren Objekten in einem Kraftfahrzeug und in der Nähe eines Kraftfahrzeugs, wobei ein erstes Objekt im Kraftfahrzeug durch amplitudenmodulierte Funksignale und ein zweites Objekt durch frequenzmodulierte Funksignale bedient wird.

Bekannte Funkfembediensysteme in oder für Kraftfahrzeuge arbeiten fast ausschließlich mit amplitudenmodulierter Übertragung der Signale. Soll zusätzlich im Kraftfahrzeug ein mit der Übertragung frequenzmodulierter Signale arbeitendes Fembediensystem eingebaut werden (z.B. eine fest installierte Garagentorfembedienung), so müssen zwei verschiedenartige, unabhängige Funksendeeinheiten in der Fernbedienung integriert sein um beide Fembediensysteme mittels dieser einen Funkfembedienung zu betätigen. Der nach BAS.T (Bundesverband Antriebs-Systeme-Tore) vereinheitlichte Funkstandard arbeitet frequenzmoduliert. Dagegen setzt die Kraftfahrzeugindustrie, wie erwähnt, zur Funkfernbedienung von Kraftfahrzeugfunktionen Systeme ein, die mit amplitudenmodulierten Signalen arbeiten. Ein separater Einbau beider Systeme im Kraftfahrzeug ist somit aus Gründen des Bauraums und aufgrund der zusätzlichen Kosten nur schwer machbar.

DE-A-195 28 099 befasst sich mit einem elektronischen Schließsystem mit einem Schlüssel, der eine zum bestimmungsgemäßen Betrieb dienende Elektronik enthält und mit am verschließbaren Teil befindlichen Signalverarbeitungseinrichtungen, von denen eine erste im Kraftfahrzeug angeordnet ist. Der Schlüssel tauscht mit der Signalverarbeitungseinrichtung über Sende-/Empfangsmittel ein codiertes Betriebssignal aus, so dass eine positive Auswertung des Betriebssignals ein mit der Signalverarbeitungseinrichtung in Verbindung stehendes Steuergerät zur Änderung des Schließzustandes entsprechend einer Ver- oder Entriegelung der Türen des Kraftfahrzeugs veranlasst. Wenigstens eine zweite Signatverarbeitungseinrichtung ist an einer dem Kraftfahrzeug zuordenbaren Immobilie, wie einer Garage oder einem Haus angeordnet, so dass mittels desselben codierten Betriebssignals eine Ver- oder Entriegelung wenigstens einer Türe der Immobilie durchführbar ist. Das Betriebssignal kann ein elektromagnetisches Signal, z. B. Ein HF- oder ein Infrarot-Signal sein. Außerdem können im Schlüssel sowohl Sende- als auch Empfangsmittel für HF- als auch für Infrarot-Signale angeordnet sein.

DE-A-196 52 292 betrifft eine Fernbedienung zur Betätigung eines Garagentorantriebs aus einem Fahrzeug heraus und besteht aus mindestens einem Handsender, mit dem ein Betätigungssignal aussendbar ist, das seitens des Garagentorantriebs empfangbar ist. Um die Reichweite der Fernbedienung durch den Handsender zu erweitern, wirkt der Handsender mit einer im Fahrzeug ortsfest montierten Sende-/Empfangseinheit so zusammen, dass bei Aussendung des Betätigungssignals durch den Handsender die Sende-/Empfangseinheit ein redundantes Betätigungssignal an den Garagentorantrieb aussendet.

EP-A- 0440 974 befasst sich mit einer Sicherheitseinrichtung für Kraftfahrzeuge mit einem stationären Transponder im Kraftfahrzeug und einem mobilen Transponder für einen Frage-Antwort-Dialog zum Überprüfen eines Kraftfahrzeugbenutzers und Entriegeln des Kraftfahrzeugs im Falle eines berechtigten Benutzers. Durch eine geringe Reichweite eines der beiden Sender wird die Abhörsicherheit des Dialogs gewährleistet. Der mobile Transponder besitzt einen Sender für ein HF-Signal mit einer größeren Reichweite und einen Sender für ein NF-Signal mit einer relativ geringen Reichweite. Der stationäre Transponder kann femer an den tragbaren Transponder ein von einem Schalter auslösbares Befehlssignal mit einer gegenüber dem an den tragbaren Transponder ausgesendeten Fragecodesignal unterschiedlichen Codierung senden, das den tragbaren Transponder veranlasst, ein HF-Signal auszusenden, das sich von seinem Antwortcodesignal nicht in der Reichweite, sondern ebenfalls nur in der Codierung unterscheidet. Mit Hilfe dieses zusätzlichen HF-Signals wird z. B. die Öffnung eines Garagentors veranlasst.

### Aufgaben und Vorteile der Erfindung

Es ist Aufgabe dieser Erfindung, ein mit amplitudenmodulierten Signalen arbeitendes erstes Funkfembediensystem, mit dem ein erstes Objekt fernbedient werden kann, um ein zweites mit frequenzmodulierten Signalen arbeitendes Funkfernbediensystem, mit dem ein zweites Objekt fernbedient werden kann so zu erweitern, dass nur geringe Veränderungen sowohl an der Kraftfahrzeugfembedienung als auch am Fahrzeug selbst notwendig sind.

Diese Aufgabe wird anspruchsgemäß gelöst.

Dadurch, dass wenigstens zwei getrennte AM-Kanäle zur Befehlseingabe für beide Objekte zwischen wenigstens einem Bediengerät und dem ersten durch AM-Signale fernbedienten Objekt vorgesehen sind, von denen ein erster AM-Kanal zur Befehlsübertragung zum ersten Objekt und ein zweiter AM-Kanal zur Befehlsübertragung zum zweiten Objekt dient und daß das erste Objekt Unterscheidungsmittel zur Unterscheidung von Befehlssignalen des zweiten Kanals von denen des ersten Kanals und Übertragungsmittel zur Übertragung von über den zweiten Kanal empfangenen Signalen zu einem die frequenzmodulierten Fernbediensignale für das zweite Objekt generierenden Sendegerät aufweist, ist die Fembedienfunktion für das erste Objekt (z.B. die Kraftfahrzeug-Zentralverriegelung) einfach erweiterbar, indem man mindestens den einen zusätzlichen Kanal vorsieht, der durch zusätzliche Taster oder Doppelbelegung vorhandener Taster (einfache Betätigung oder Doppelklick) bedient werden kann. D.h., dass die mehreren Kanäle entweder zeitlich oder in ihrer Frequenz getrennt sind und die Unterscheidungsmittel die beiden Kanäle zeitlich oder frequenzmäßig unterscheiden können oder auch, dass die beiden Kanäle durch eine jeweils unterschiedliche Kodierung getrennt sind und die Unterscheidungsmittel Dekodiermittel zur Dekodierung der über die beiden Kanäle übertragenen kodierten Befehlssignale aufweisen.

Eine weniger praktikable Alternative wäre die räumliche Trennung der beiden Kanäle, so dass die Unterscheidungsmittel den Sendeort oder den Übertragungsweg der beiden Kanäle unterscheiden können.

In der bevorzugten Ausführungsform ist das erste fembedienbare Objekt eine Kraftfahrzeugzentralverriegelung, die von einem Zentralverriegelungssteuergerät angesteuert wird, und das zweite fembediente Objekt ist eine Garagentorsteuerung die durch ein Garagentor-Fernbediensendegerät aktiviert wird.

Dieses Garagentor-Fernbediensendegerät ist im Kraftfahrzeug vorgesehen und funktionell mit dem Zentralverriegelungssteuergerät verbunden.

Die Übertragungsmittel weisen entweder eine separate Verkabelung im Kraftfahrzeug für die Übertragung von Fernbediensignalen vom Zentralverriegelungssteuergerät zum Garagentor-Fernbediensendegerät und zur Übertragung von Speiseleistung oder eine Multiplexnetzwerk auf, das das Zentralverriegelungssteuergerät funktionell mit dem Garagentorfembediensendegerät verbindet. Dieses Multiplexnetzwerk kann ein CAN-Netz sein. Wie bekannt, erlaubt die Vernetzung von Fahrzeugelektronikkomponenten durch ein CAN-Netzwerk eine Kommunikation zwischen verschiedenen Geräten oder Modulen. Diese Kommunikationsmöglichkeit eröffnet einen weit größeren Spielraum der Gestaltung solcher neuer Fahrzeugfunktionen, wie sie die Erfindung vorsieht.

So können die zwischen dem Zentralverriegelungssteuergerät und dem Garagentor-Fernbediensendegerät zu übertragenden Signale über das CAN-Netz durch zusätzliche Ergänzung der Übertragungssoftware übertragen werden. Andernfalls kann, wenn das Fahrzeug vernetzt ist und das Garagentorfernbediensendegerät nicht über eine eigene Multiplexschnittstelle verfügt, die Übertragung über ein weiteres mit dem Zentralverriegelungssteuergerät verbundenes Steuergerät erfolgen. Z.B. kann sich das Garagentor-Fembediensendegerät im Innenspiegel befinden, während der nächste Multiplexknoten in der Dachelektronik liegt. Dann wird der Befehl zum Öffnen oder Schließen eines Garagentors von dem Garagentor-Fembediensendegerät über die Dachelektronik empfangen. D.h. dass die Dachelektronik das Garagentorfembediensendegerät so ansteuert, dass letzteres ein frequenzmoduliertes Funksignal zum Öffnen oder Schließen des Garagentors erzeugt.

Wie die obigen Ausführungen zeigen, ermöglicht die Erfindung zusätzlichen Komfort durch Integration einer weiteren Fembedienfunktion. Die Funkkommunikation zur Befehlseingabe vom Fahrer oder der Fahrerin zum Fahrzeug erfolgt weiterhin mit amplitudenmodulierten Signalen. Trotzdem ist eine Nutzung der im Fahrzeug befindlichen oder zusätzlich eingebauten, mit frequenzmodulierten Signalen arbeitenden Systeme möglich, indem man das bestehende, amplitudenmodulierte Signale übertragende System als eine Art Relaisstation für die mit frequenzmodulierten Signalen arbeitende weitere Fembedienfunktion verwendet. Dadurch lässt sich auf kleinem Bauraum eine kostengünstige Funktionserweiterung ermöglichen. Fahrzeugseitig ist, wenn eine Multiplex-Netzverkabelung vorhanden ist, über eine Softwareerweiterung die zusätzliche Fembedienfunktion realisierbar.

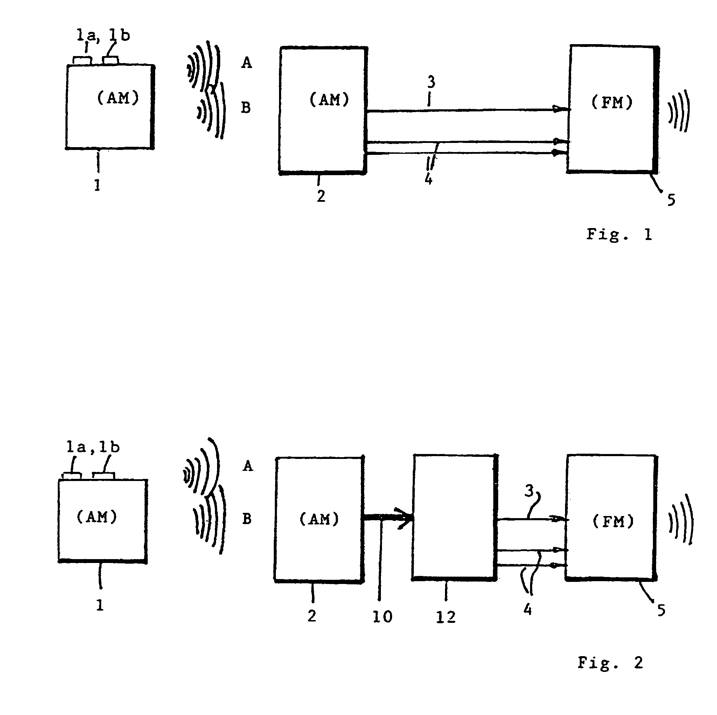

Nachstehend werden weitere vorteilhafte Merkmale des erfindungsgemäßen Funkfembediensystems anhand der zwei Varianten einer bevorzugten Ausführungsform darstellenden Figuren 1 und 2 beschrieben.
Figur 1 zeigt in Form eines Funktionsblockschaltbildes die Hauptkomponenten der bevorzugten Ausführungsform in einer ersten Variante, bei der das Kraftfahrzeug über kein Multiplexnetzwerk verfügt; und
Figur 2 zeigt ebenfalls in Form von Funktionsblöcken die wesentlichen Komponenten des erfindungsgemäßen Funkfembediensystems in einer zweiten Variante, bei der das Kraftfahrzeug über ein Multiplexnetzwerk (CAN-Netz), das Garagentorfembediensendegerät jedoch nicht über eine Multiplexschnittstelle verfügt.

Figur 1 zeigt links ein Bediengerät 1 für die Funkfembedienung der Zentralverriegelung. Das Bediengerät 1 sendet über zwei getrennte Kanäle A und B amplitudenmodulierte Funkfernbediensignale für die Zentralverriegelung im Kraftfahrzeug und für das Schließen/Öffnen des Garagentors aus. Dazu hat das Bediengerät 1 beispielhaft zwei Bedientasten 1a und 1b. Die über die beiden getrennten Kanäle A und B ausgesendeten Befehlssignale werden von einem Zentralverriegelungssteuergerät 2 empfangen, welches Unterscheidungsmittel zur Unterscheidung der über die beiden getrennten Kanäle A und B gesendeten Fernbediensignale hat. Diese Unterscheidungsmittel können Signale, die über die zeitlich oder frequenzmäßig getrennten Kanäle A und B ausgesendet werden oder, den beiden Kanälen A oder B entsprechend, unterschiedlich kodierte Signale unterscheiden.

Bei der in Figur 1 gezeigten Systemvariante verfügt das Kraftfahrzeug nicht über ein Multiplexnetzwerk, sondern hat eine konventionelle Verkabelung. D.h., dass Mittel zur Übertragung von Fernbediensignalen für die Garagentorfembedienung eine besondere Verkabelung 3 vom Zentralverriegelungssteuergerät 2 zum Garagentor-Fernbediensendegerät 5 haben. Weiterhin wird Speiseleistung 4 vom Zentralverriegelungssteuergerät 2 zum Garagentor-Fernbediensendegerät 5 übertragen.

Das Garagentor-Fernbediensendegerät 5 sendet frequenzmodulierte (FM) Signale an eine (nicht gezeigte) Garagentorsteuerung.

Figur 2 zeigt eine alternative Ausführung, bei der das Kraftfahrzeug über ein CAN-Multiplexnetz 10 verfügt. In diesem Fall hat das Garagentorfembediensendegerät 5 keine eigene Multiplexschnittstelle. Deshalb dient ein weiteres Steuergerät 12, z.B. die Dachelektronik des Kraftfahrzeugs als Relaisstation, da sie über eine Multiplexschnittstelle für das CAN-Netz verfügt. Die Dachelektronik 12 ihrerseits sendet dann die Fernbediensignale zur Fernbedienung des Garagentors über ein Kabel 3 sowie ggf. Speiseleistung über Kabel 4 an das Garagentor-Fernbediensendegerät 5. Beispielsweise befindet sich das Garagentor-Fembediensendegerät 5 im Innenspiegel des Kraftfahrzeugs. D.h., dass das Garagentor-Fembediensendegerät 5 die Botschaft zum Öffnen/Schließen des Garagentors von dem Zentralverriegelungssteuergerät 2 über die Dachelektronik 12 nach Vorliegen eines Wecksignals empfängt. Die Dachelektronik 12 steuert das Garagentorfembediensendegerät 5 an, woraufhin dieses ein frequenzmoduliertes Funksignal zum Öffnen oder Schließen des nicht gezeigten Garagentors erzeugt.

Wenn dagegen das Garagentor-Fembediensendegerät über eine eigene Multiplexschnittstelle verfügt, kann das CAN-Netz 10 direkt mit dem Garagentor-Fernbediensendegerät 5 verbunden werden, und die Signale müssen dann nicht mehr über die Relaisstation der Dachelektronik 12 laufen.

Selbstverständlich funktioniert die Übertragung der amplitudenmodulierten Befehlssignale vom Bediengerät 1 über die beiden getrennten Kanäle A und B genauso wie bei der in Figur 1 gezeigten Systemvariante.

Nachstehend wird für die in Figur 2 gezeigte Systemvariante ein Funktions-Flussdiagramm angegeben, welches den Signalfluss vom Bediengerät 1 bis zur Garagentorsteuerung veranschaulicht:
- S1:: AM-Bediensignal vom Bediengerät 1 senden
(betrifft: Garagentor Öffnen/Schließen)
- S2:: AM-Signal wird von dem Zentralverriegelungssteuergerät 2 empfangen
(betrifft: Garagentor Öffnen/Schließen)
- S3:: Wake-Up Signal zur Dachelektronik 12 **
- S4:: Dachelektronik 12** schaltet Spannungsversorgung zum Garagentor-Fernbediensendegerät 5 * ein.
- S5:: Zentralverriegelungssteuergerät 2 sendet Öffnungssignal zur Dachelektronik 12 **.
- S6:: Dachelektronik 12 ** gibt Sendesignal an das Garagentor-Fembediensendegerät 5 *
- S7:: Garagentor-Fernbediensendegeräf 5 * sendet frequenzmoduliertes Signal (FM) zum (nicht gezeigten) Garagentorantrieb
- S8:: Garagentor * öffnet/schließt

** statt über die Dachelektronik 12 kann (wie schon erwähnt) das Garagentor-Fernbediensendegerät auch direkt über das CAN-Netz10 angesteuert werden.
* gilt auch für andere Funkfembedienfunktionen mit frequenzmodulierten Signalen, d.h. für weitere fembediente Objekte

## Patentansprüche

1. Funkfernbediensystem zur Übertragung von Fembediensignalen zu wenigstens zwei fernbedienbaren Objekten in und in der Nähe eines Kraftfahrzeugs, wobei ein erstes Objekt im Kraftfahrzeug durch amplitudenmodulierte (AM) Funksignale und ein zweites Objekt durch frequenzmodutierte (FM) Funksignale bedient wird,
**dadurch gekennzeichnet, daß** wenigstens zwei AM-Kanäle (A, B) zur Befehlseingabe für beide Objekte zwischen wenigstens einem Bediengerät (1) und dem ersten, durch AM-Signale fembedienten Objekt (2) vorgesehen sind, von denen ein erster AM-Kanal (A) zur Befehlsübertragung zum ersten Objekt und ein zweiter AM-Kanal (B) zur Befehlsübertragung zum zweiten Objekt dient, und
daß das erste Objekt (2) Unterscheidungsmittel zur Unterscheidung von Befehlssignalen des zweiten Kanals (B) von denen des ersten Kanals (A) und Übertragungsmittel zur Übertragung von über den zweiten Kanal (B) empfangenen Signalen zu einem, die FM-Fembediensignale für das zweite Objekt generierenden Sendegerät aufweist.

2. Funkfernbediensystem nach Anspruch 1, **dadurch gekennzeichnet, daß** die beiden Kanäle (A, B) in ihrer Frequenz oder zeitlich getrennt sind, und daß die Unterscheidungsmittel die beiden Kanäle (A, B) in ihrer Frequenz oder zeitlich unterscheiden können.

3. Funkfernbediensystem nach Anspruch 1, **dadurch gekennzeichnet, daß** die beiden Kanäle (A, B) durch eine jeweils unterschiedliche Kodierung unterscheidbar sind, und die Unterscheidungsmittel Dekodiermittel für die Dekodierung der über die beiden Kanäle (A, B) übertragene Befehlssignale aufweisen.

4. Funkfernbediensystem nach einem der Ansprüche 1-3, **dadurch gekennzeichnet, daß** das durch AM-Funksignale fembediente erste Objekt eine durch ein Zentralverriegelungssteuergerät (2) aktivierbare Kraftfahrzeug-Zentralverriegelung und das durch FM-Funksignale fembediente zweite Objekt eine über ein Garagentor-Fernbediensendegerät (5) aktivierbare Garagentorsteuerung ist.

5. Funkfernbediensystem nach Anspruch 4, **dadurch gekennzeichnet, daß** das Garagentor-Fernbediensendegerät (5) im Kraftfahrzeug vorgesehen und funktionell mit dem Zentralverriegelungssteuergerät (2) verbunden ist.

6. Funkfernbediensystem nach Anspruch 4 oder 5, **dadurch gekennzeichnet, daß** die Übertragungsmittel eine separate Verkabelung (3, 4) im Kraftfahrzeug für die Übertragung von Fernbediensignalen und von Speiseleistung vom Zentralverriegelungssteuergerät (2) zum Garagentor-Fernbediensendegerät (5) aufweisen.

7. Funkfembediensystem nach Anspruch 4 oder 5, **dadurch gekennzeichnet, daß** das Garagentor-Fernbediensendegerät (5) mit dem Zentralverriegelungssteuergerät (2) im Kraftfahrzeug durch ein Multiplexnetzwerk (10) verbunden ist.

8. Funkfernbediensystem nach Anspruch 7, **dadurch gekennzeichnet, daß** das Multiplexnetzwerk ein CAN-Netzwerk ist.

9. Funkfernbediensystem nach Anspruch 8, **dadurch gekennzeichnet, daß** dem Garagentor-Fernbediensendegerät (5) ein weiteres mit dem Zentralverriegelungssteuergerät (2) über das CAN-Netzwerk (12) verbundenes Gerät (12) mit einer Multiplexschnittstelle vorgeschaltet ist.

10. Funkfernbediensystem nach Anspruch 9, **dadurch gekennzeichnet, daß** das vorgeschaltete Gerät (12) die Dachelektronik des Kraftfahrzeugs ist.

## Claims

1. Radio remote control system for transmitting remote-control signals to at least two remote-controlled objects in a motor vehicle and in the vicinity of a motor vehicle, a first object being controlled in the motor vehicle by means of amplitude-modulated (AM) radio signals, and a second object being controlled by means of frequency-modulated (FM) radio signals, **characterized in that** at least two AM channels (A, B) are provided for inputting instructions for both objects between at least one operator control (1) and the first object (2) which is remote controlled by means of AM signals, a first AM channel (A) of which has the purpose of transmitting instructions to the first object, and a second AM channel (B) of which has the purpose of transmitting instructions to the second object, and **in that** the first object (2) has distinguishing means for distinguishing instruction signals of the second channel (B) from those of the first channel (A), and transmission means for transmitting signals which are received over the second channel (B) to a transmitter which generates the FM remote-control signals for the second object.

2. Radio remote control system according to Claim 1, **characterized in that** the two channels (A, B) are separated in their frequency or chronologically, and **in that** the distinguishing means can distinguish the two channels (A, B) in their frequency or chronologically.

3. Radio remote control system according to Claim 1, **characterized in that** the two channels (A, B) can be distinguished by respectively different coding, and the distinguishing means have decoding means for decoding the instruction signals which are transmitted over the two channels (A, B).

4. Radio remote control system according to one of Claims 1 to 3, **characterized in that** the first object which is remote controlled by AM radio signals is a motor vehicle central locking system which can be activated by a central locking system controller (2) and the second object which is remote controlled by means of FM radio signals is a garage door controller which can be activated by means of a garage door remote control transmitter (5).

5. Radio remote control system according to Claim 4, **characterized in that** the garage door remote control transmitter (5) is provided in the motor vehicle and is functionally connected to the central locking system controller (2).

6. Radio remote control system according to Claim 4 or 5, **characterized in that** the transmission means have separate cabling (3, 4) in the motor vehicle for transmitting remote control signals and for feeding power from the central locking system controller (2) to the garage door remote control transmitter (5).

7. Radio remote control system according to Claim 4 or 5, **characterized in that** the garage door remote control transmitter (5) is connected to the central locking system controller (2) in the motor vehicle by means of a multiplex network (10).

8. Radio remote control system according to Claim 7, **characterized in that** the multiplex network is a CAN network.

9. Radio remote control system according to Claim 8, **characterized in that** a further device (12) which is connected to the central locking system controller (2) via the CAN network (12) is connected upstream of the garage door remote control transmitter (5) using a multiplex interface.

10. Radio remote control system according to Claim 9, **characterized in that** the device (12) which is connected upstream is the roof electronics of the motor vehicle.

## Revendications

1. Système de télécommande radio pour transmettre des signaux de commande à distance à deux objets télécommandables, situés dans une automobile ou à proximité de celle-ci, un premier objet dans le véhicule étant commandé par des signaux radio modulés en amplitude (AM) tandis que le deuxième objet est commandé par des signaux radio modulés en fréquence (FM),
**caractérisé en ce qu'**
au moins deux canaux AM (A, B), pour l'introduction des ordres destinés aux deux objets, sont prévus entre au moins un appareil de manoeuvre (1) et le premier objet (2) télécommandé à distance par des signaux AM, un premier canal AM (A) servant à transmettre les ordres au premier objet tandis qu'un deuxième canal AM (B) sert à transmettre les ordres au deuxième objet, et
le premier objet (2) comprend des moyens de différenciation pour distinguer les signaux de commande du deuxième canal (B) de ceux du premier canal (A), ainsi que des moyens de transmission des signaux reçus par le deuxième canal (B) à un appareil émetteur générant des signaux FM de télécommande destinés au deuxième objet.

2. Système de télécommande radio selon la revendication 1,
**caractérisé en ce que**
les deux canaux (A, B) sont séparés en fréquence ou dans le temps et les moyens de différenciation peuvent distinguer les deux canaux (A, B) par leur fréquences ou par en temps.

3. Système de télécommande radio selon la revendication 1,
**caractérisé en ce que**
les deux canaux (A, B) peuvent être distingués par la différence de leurs codages respectifs, et les moyens de distinction présentent des moyens de décodage des signaux de commande transmis par les deux canaux (A, B).

4. Système de télécommande radio selon l'une des revendications 1 à 3,
**caractérisé en ce que**
le premier objet télé commandé par les signaux radio AM est un verrouillage centralisé du véhicule actionnable par un appareil de commande de verrouillage centralisé (2), tandis que la deuxième objet télécommandé par des signaux radio FM est une commande d'une porte de garage, actionnable par un émetteur de télécommande de porte de garage (5).

5. Système de télécommande radio selon la revendication 4,
**caractérisé en ce que**
l'émetteur de télécommande de porte de garage (5) est prévu dans le véhicule et relié fonctionnellement à l'appareil de commande de verrouillage centralisé (2).

6. Système de télécommande radio selon l'une des revendications 4 ou 5,
**caractérisé en ce que**
les moyens de transmission présentent un câblage (3, 4) séparé dans le véhicule, pour transmettre des signaux de télécommande et pour alimenter en puissance l'émetteur de télécommande de porte de garage (5) par l'appareil de commande de verrouillage centralisé (2).

7. Système de télécommande radio selon l'une des revendications 4 ou 5,
**caractérisé en ce que**
l'émetteur de télécommande de porte de garage (5) est relié dans le véhicule à l'appareil de verrouillage centralisé (2) par un réseau de multiplexage (10).

8. Système de télécommande radio selon la revendication 7,
**caractérisé en ce que**
le réseau de multiplexage est un réseau CAN.

9. Système de télécommande radio selon la revendication 8,
**caractérisé en ce qu'**
en amont de l'émetteur télécommande de porte de garage (5) est monté un autre appareil (12), relié à l'appareil de commande de verrouillage centralisé (2) par le réseau de multiplexage CAN (10).

10. Système radio de télécommande selon la revendication 9,
**caractérisé en ce que**
l'appareil amont (12) est l'électronique de toit du véhicule.
